(19) Europäisches Patentamt
European Patent Office
Office européen des brevets

(11) EP 0 639 618 B1

(12) # EUROPÄISCHE PATENTSCHRIFT

(45) Veröffentlichungstag und Bekanntmachung des Hinweises auf die Patenterteilung:
**02.06.1999 Patentblatt 1999/22**

(51) Int Cl.6: **C08L 63/00**, C08G 18/00, C08G 59/40

(21) Anmeldenummer: **94112192.3**

(22) Anmeldetag: **04.08.1994**

(54) **Rieselfähige pulverförmige Pressmassen auf Epoxidharzbasis**

Pourable powdery moulding materials based on epoxy resins

Masses à mouler pulvérulentes pouvant s'écouler à base de résines époxyde

(84) Benannte Vertragsstaaten:
**CH DE FR GB IT LI NL SE**

(30) Priorität: **17.08.1993 DE 4327570**

(43) Veröffentlichungstag der Anmeldung:
**22.02.1995 Patentblatt 1995/08**

(73) Patentinhaber: **BAYER AG**
**51368 Leverkusen (DE)**

(72) Erfinder:
- **Schrader, Lutz, Dr.**
  **D-47799 Krefeld (DE)**
- **Müller, Hanns Peter, Dr.**
  **D-51519 Odenthal-Höffe (DE)**
- **Kopp, Richard, Dr.**
  **D-51061 Köln (DE)**

(56) Entgegenhaltungen:
**EP-A- 0 232 540**
**EP-A- 0 473 033**
**EP-A- 0 531 844**
**DE-A- 1 545 191**

Bemerkungen:
Die Akte enthält technische Angaben, die nach dem Eingang der Anmeldung eingereicht wurden und die nicht in dieser Patentschrift enthalten sind.

EP 0 639 618 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft rieselfähige Preßmassen, ihre Herstellung und Verwendung. Die erfindungsgemäßen Preßmassen bestehen aus anorganischem Füllstoff, organischem Reaktivharz, gegebenenfalls weiteren Hilfs- und Zusatzstoffen und latentem Katalysator. Das organische Reaktivharz besteht aus gegebenenfalls flüssigem Epoxidharz und einem bei Raumtemperatur festen, pulverisierten Polyisocyanat. Reaktionsgemische aus Polyepoxiden und Polyisocyanaten finden immer mehr Interesse als Ausgangskomponenten zur Herstellung von hochwertigen Polyadditionskunststoffen. So können aus 1,2-Epoxiden und Polyisocyanaten unter Verwendung von Härtungskatalysatoren Kunststoffe mit Isocyanurat- und Oxazolidinonstrukturen aufgebaut werden (DE-A-1 115 922).

Lagerstabile Reaktionsharzmischungen dieser Art sind in EP-A-0 272 563 und EP-A-0 331 996 beschrieben. Sie betreffen lagerstabile Mischungen, die den an sich sehr hochwertigen Endprodukten eine breite technische Anwendung erschließen. Die Harze dienen als Ausgangskomponenten für Elektroisolierstoffe, aber auch zur Herstellung von Verbundwerkstoffen mit extrem guten Eigenschaften (TG 300°C, Flammschutz ohne Halogen, hohe Chemikalienbeständigkeit, Festigkeit, Schlagzähigkeit vieles andere mehr). Die Harze, nach dem dargelegten Stand der Technik, werden über bestimmte, die Reaktion zwischen Epoxidgruppen und Isocyanatgruppen inhibierende Alkylierungsmittel stabilisiert.

Aufgabe der vorliegenden Erfindung war es, Reaktivharze in rieselfähiger Form herzustellen.

Gemäß vorliegender Erfindung ist es überraschenderweise gelungen, Reaktivharze in rieselfähiger Form herzustellen, ohne die an sich bekannten Stabilisatoren mitverwenden zu müssen. Dies ist äußerst überraschend und war für den Fachmann nicht vorhersehbar, da auch physikalische Mischungen von festen pulverisierten Polyisocyanaten mit festen pulverisierten Polyepoxiden beim Lagern die bekannte "schleichende" Reaktion eingehen und nach 1 bis 2 Monaten Lagerzeit unbrauchbar werden.

Dies ist erfindungsgemäß überraschenderweise nicht der Fall.

Gegenstand der Erfindung sind rieselfähige Preßmassen bestehend aus 40-80 Gew.-%, vorzugsweise 60-80 Gew.-% anorganischem Füllstoff, 20-60 Gew.-% organischem Reaktivharz sowie gegebenenfalls weiterer Hilfs- und Zusatzstoffen , dadurch gekennzeichnet, daß das Reaktionsharz ein gegebenenfalls flüssiges Epoxid, einen latenten Katalysator und ein bei Raumtemperatur festes pulverisiertes Polyisocyanat enthält.

Gegenstand der Erfindung ist auch ein Verfahren zur Herstellung von solchen rieselfähigen, hochgefüllten Preßmassen bei dem in einer ersten Stufe der anorganische Füllstoff mit einem gegebenenfalls flüssigen Epoxidharz und einem latenten Katalysator intensiv vermischt wird ("gecoatet") und anschließend in einer zweiten Stufe die so erhaltene pulverförmige Mischung mit festem, pulverisiertem Polyisocyanat gemischt wird.

Das organische Reaktivharz besteht aus

5 bis 50 Gew.-Teilen Epoxidharz,
0,01 bis 10 Gew.-Teilen bezogen auf 100 Gewichtsteile des vorliegenden Harzes eines thermolatenten Katalystors und
50 bis 95 Gew.-Teilen eines festen, pulverisierten Polyisocyanat mit einem Schmelzpunkt oberhalb 25°C.

Das Epoxidharz weist pro Molekül 2 bis 4 Epoxidgruppen auf und entspricht einem Epoxidäquivalentgewicht von 90 bis 500.

Das Polyisocyanat kann der folgenden Formel entsprechen :

$Q\ (NCO)_n$, in der
$n = 2$ bis 4 und Q

einen aromatischen Kohlenwasserstoffrest mit 6 bis 15 oder einen araliphatischen Kohlenwasserstoff mit 8 bis 15 C-Atomen bedeutet.

Das Polyisocyanat kann auch ein Isomeren und/oder Homologengemisch von Polyisocyanaten der Diphenylmethanreihe sein.

Bei dem latenten Katalysator handelt es sich um an sich bekannte Katalysatoren der Oniumstruktur und/oder um latente Katalysatoren der Lewis-Salz-Struktur, demnach z.B. Bortrihalogenid-Komplexe von tert.-Aminen.

Gegenstand der Erfindung ist auch Verwendung der rieselfähigen Preßmassen, gegebenenfalls nach Zugabe von an sich bekannten weiteren Katalysatoren, Trennmittel, Flammschutzmittel, Farbstoffen und anderen bekannten Additiven wie Glasfasern, C-Fasern, Aramidfasem, Naturfasem, Cellulosefasern, -spänen und -pulvern zur Herstellung von Formkörpern, Elektroisolierstoffen, Beschichtungen, Verklebungen und Schichtpreßstoffen jeglicher Art.

Bevorzugte anorganische Füllstoffe sind

- Quarzmehle, Kreide, $Al_2O_3$, $Al(OH)_3$, Quarzgut, $SiO_2$, Ruß, SiC, Korund, Metallpulver, Metalloxidpulver.

Bevorzugte, gegebenenenfalls flüssige Epoxidharze sind beliebige, mindestens zwei Epoxidgruppen, d.h. vorzugsweise 1,2-Epoxidgruppen aufweisende aliphatische, cycloaliphatische, aromatische oder heterocyclische Verbindungen. Die bevorzugten Polyepoxide weisen pro Mol 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hyrochinon, 4,4'-Dihydroxydiphenylmethan, von 4,4'-Dihydroxy-3,3'-dimethyldiphenylmethan, von 4,4'-Dihydroxydiphenylmethan, 4,4'-Dihydroxydiphenylcyclohean, von 4,4'-Dihydroxy-3,3'-dimethyldiphenylpropan, von 4,4'-Dihydroxydiphenyl, aus 4,4'-Dihydroxydiphenylsulfon, von Tris-(4-hydroxyphenyl)-methan, den Chlorierungs-und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. GB-A-1 017 612) oder von Polyphenolen, die durch Kondensation von Phenolen und langkettigen, mindestens zwei Halogenatome enthaltenden Halogenparaffinen erhalten wurden (vgl. GB-A-1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N-Diepoxypropyl-4-amino-phenylglycidether (vgl. GB-A-772 830 und GB-A-816 923).

Außerdem kommen in Frage: Glycidester mehrwertiger aromatischer, aliphatischer und cycloaliphatischer Carbonsäuren, beispielsweise Phthalsäurediglycidylester, Adipinsäurediglycidylester und Glycidylester vom Umsetzungsprodukten aus 1 Mol eines aromatischen oder cycloaliphatischen Dicarbonsäureanhydrids und 1/2 Mol eines Diols bzw. l/n Mol eines Polyols mit n Hydroxygruppen oder Hexahydrophthalsäurediglycidylester, die gegebenenfalls mit Methylgruppen substituiert sein können.

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten auf 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butandien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentandien, ungesättigten Polyestern, ferner Epoxidierungsprodukte aus Olerfinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen verwendet:

Polyglycidylether mehrwertiger Phenole, insbesondere von Bisphenol A; Polyepoxidverbindungen auf der Basis von aromatischen Aminen, insbesondere Bis(N-epoxypropyl)-anilin N,N'-Dimethyl-N,N'-diepoxypropyl-4,4'-diaminodiphenylmethan und N-Diepoxypropyl-4-amino-phenylglycidylether; Polyglyciedylester aus cycloaliphatischen Dicarbonsäuren, insbesondere Hexahydrophthalsäurediglycidylester und Polyepoxide aus dem Umsetzungsprodukt von n-Molen Hexahydrophthalsäuranhydrid und 1 Mol eines Polyols mit n-Hydroxylgruppen (n = ganze Zahl von 2-6), insbesondere 3 Mol Hexahydrophthalsäureanhydrid und einem Mol 1,1,1-Trimethylolpropan, 3,4-Epoxy-cylcohexylmethan-3,4-epoxycyclohexan-carboxylat.

Als feinteilige Polyisocyanate eignen sich diejenigen Stoffe, die einen Schmelzpunkt oberhalb von 25°C, vorzugsweise oberhalb von 40°C haben. Hierzu gehören aliphatische, araliphatische, aromatische und heterocyclische Polyisocyanate, Polyphenyl-polymethylen-polyisocyanate, die durch anilin-Formaldehyd-Kondensation und anschließende Phosgenierung erhalten werden, perchlorierte Arylpolyisocyanate, Carbodiimidgruppen aufweisende Polyisocyanate, Allophanatgruppen aufweisende Polyisocyanate, Isocyanurat aufweisende Polyisocyanate, Urethan- oder Harnstoffgruppen aufweisende Polyisocyanate, acylierte Harnstoffgruppen aufweisende Polyisocyanate, Biuretgruppen aufweisende Polyisocyanate, durch Telomerisationsreaktion hergestellte Polyisocyanate, Estergruppen aufweisende Polyisocyanate, ferner bevorzugte Uretdiongruppen aufweisende Diisocyanate und Harnstoffgruppen aufweisende Diisocyanate. Als Beispiel für derartige geeignete Polyisocyanate seien genannt:

| | |
|---|---|
| 4,4'-Diisocyanatodiphenylmethan | Fp. 42°C |
| p-Xylylendiisocyanat | Fp. 45-46°C |
| 1,5-Diisocyanatomethylnaphthalin | Fp. 88-89°C |
| 1,3-Phenylendiisocyanat | Fp. 51°C |
| 1,4-Phenylendiisocyanat | Fp. 94-96°C |
| 1-Methylbenzo-2,5-diisocyanat | Fp. 39°C |
| 1,3-Dimethylbenzol-4,6-diisocyanat | Fp. 70-71°C |
| 1,4-Dimethylbenzol-2,5-diisocyanat | Fp. 76°C |
| 1-Nitrobenzol-2,5-diisocyanat | Fp. 59-61°C |
| 1,4-Dichlorbenzol-2,5-diisocyanat | Fp. 134-137°C |
| 1-Methoxybenzol-2,4-diisocyanat | Fp. 75°C |
| 1-Methoxybenzol-2,5-diisocyanat | Fp. 89°C |
| 1,3-Dimethoxybenzol-4,6-diisocyanat | Fp. 125°C |
| Azobenzol-4,4'-diisocyanat | Fp. 158-161°C |
| Diphenylether-4,4'-diisocyanat | Fp. 66-68°C |
| Diphenylmethan-4,4'-diisocyanat | Fp. 42°C |
| Diphenyl-dimethylmethan-4,4'-diisocyanat | Fp. 92°C |
| Naphthalin-1,5-diisocyanat | Fp. 130-132°C |
| 3,3'-Dimethyllbiphenyl-4,4-diisocyanat | Fp. 68-69°C |
| Diphenyldisulfid-4,4'-diisocyanat | Fp. 58-60°C |
| Diphenylsulfon-4,4'-diisocyanat | Fp. 154°C |
| 1-Methylbenzol-2,4,6-triisocyanat | Fp. 75°C |
| 1,3,5-Trimethylbenzol-2,4,6-triisocyanat | Fp. 93°C |
| Triphenylmethan-4,4',4''-triisocyanat | Fp. 89-90°C |
| 4,4'-Diisocyanato-(1,2)-diphenyl-ethan | Fp. 88-90°C |
| dimeres 1-Methyl-2,4-phenhylendiisocyanat | Fp. 156°C |
| dimeres 1-Isopropyl-2,4-phenylendiisocyanat | Fp. 125°C |
| dimeres 1-Chlor-2,4-phenylendiisocyanat | Fp. 177°C |
| dimeres 2,4'-Diisocyanato-diphenylsulfid | Fp. 178-180°C |
| dimeres Diphenhylmethan-4,4'-diisocyanat | |
| 3,3'-Diisocyanato-4,4'-dimethyl-N,N'-diphenylharnstoff | |
| N,N'-Bis/4(4-Isocyanatophenylmethyl)phenyl/harnstoff | |
| N,N'-Bis/4(2-Isocyantophenylmethyl)phenyl/harnstoff. | |

Besonders bevorzugt werden 4,4'-Diisocyanato-diphenylmethan, 1,5-Naphthalindiisocyanat, 3,3'-Diisocyanato-4,4'-dimethyl-N,N'-diphenylharnstoff, dimeres 1-Methyl-2,4-diisocyanatobenzol, dimeres 4,4'-Diisocyanato-diphenylmethan und 3,3'-Dimethyl-4,4'-diisocyanato-diphenyl eingesetzt.

Als latente Katalysatoren können beispielsweise tertiäre oder quartäre Ammoniumsalze aus (i) organischen Aminen und (ii) alkylierend wirkenden oder sauren Estern von organischen Phosphonsäuren oder der Phosphorsäure oder Additionskomplexe von Bortrihalogeniden mit tert.-Aminen verwendet werden.

Bei dem Bestandteil (i) der latenten Katalysatoren handelt es sich um beliebige mono- oder polyfunktionelle organische Amine mit sekundären und/oder tertiären Aminogruppen. Bei der Herstellung der Katalysatoren können sekundäre Aminogruppen durch Alkylierung in tert.-Ammoniumgruppen, tert.-Aminogruppen durch Neutralisation in tert.-Ammoniumgruppen oder durch Quaternierung in quatäre Ammoniumgruppen überführt werden. Geeignete Amine der genannten Art weisen im allgemeinen ein Molekulargewicht von 45 bis 353, vorzugsweise von 45 bis 185 auf. Typische Beispiele geeigneter Amine sind Dimethylamin, Trimethylamin, Diethylamin, Triethylamin, Di-n-butylamin, Trin-n-butylamin, N,N'-Dimethylethylethylendiamin, N,N,N',N'-Tetramethyl-ethylendiamin, N,N-Dimethylbenzylamin, Triethylendiamin, Dimethyloctylamin, Diazabicyclooctan, Methyltrioctylamin, N-Methylmorpholin und Bis-(N,N-dimethyl-aminoethyl)-ether.

Bei dem Bestandteil (ii) handelt es sich um alkylierend wirkende oder saure Ester von organischen Phosphonsäuren oder der Phosphorsäure. Vorzugsweise werden als Phosphonsäureester neutrale, alkylierend wirkende Ester von organischen Phosphonsäuren verwendet. Diese Verbindungen weisen im allgemeinen ein Molekulargewicht von 124 bis 214 auf. Gut geeignet sind beispielsweise Methanphosphonsäuredimethylester, Methanphosphonsäurediethylester, Benzolphosphonsäuredimethylester, Benzolphosphonsäurediethylester oder Ethanphosphonsäurediethylester. Als Ester der Phosphorsäure können sowohl einbasische saure Ester als auch neutrale Ester verwendet werden. Diese Verbindungen weisen im allgemeinen ein Molekulargewicht von 126 bis 268 auf. Geeignet sind beispielsweise Dimethylphosphat, Di-n-butylphosphat, Triethylphosphat oder Tri-n-butylphosphat. Bevorzugte Bestandteile (ii) der erfindungswesentlichen Katalysatoren sind Methanphosphonsäuredimethylester und Di-n-butylphosphat.

Die Herstellung der Katalysatoren erfolgt nach bekannten Verfahren (z.B. Houben-Weyl, Bd. XII/2, S. 262 ff) durch Umsetzung der beispielhaft genannten Komponenten (i) und (ii) in vorzugsweise äquivalenten Mengen mit oder ohne Lösungsmittel bei Temperaturen von 20 bis 200°C. Dabei kann vorteilhaft sein, unter Inertgas und/oder Druck zu arbeiten. Es ist auch möglich, beispielsweise einen Überschuß der Komponenten (i) oder (ii) einzusetzen, und anschließend gegebenenfalls den nicht umgesetzten Überschuß beispielsweise destillativ zu entfernen.

Besonders bevorzugte Beispiele erfindungsgemäß verwendbarer Katalsatoren sind:

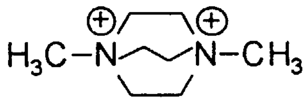 , 2 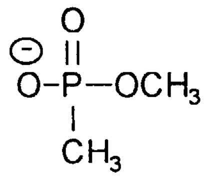

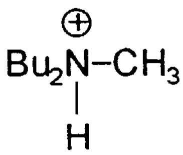 , 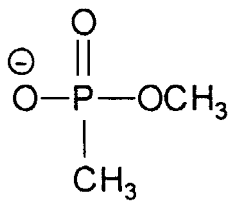

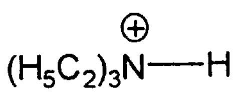 , 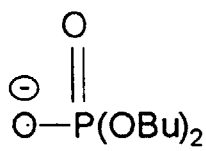

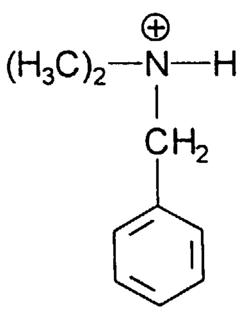 , 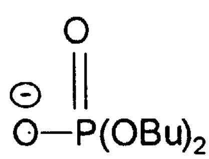

Geeignete latente Katalysatoren sind beispielsweise die bekannten Additionskomplexe von Bortrihalogeniden, insbesondere Bortrichloriden oder Bortrifluoriden mit tert.-Aminen, beispielsweise die in DE-A-2 655 367 beschriebenen Additionskomplexe von Bortrichlorid und tert.-Aminen der allgemeinen Formel

$$BCl_3.NR_1R_2R_3$$

in der $R_1$, $R_2$ und $R_3$ gleich oder verschiedene aliphatische, aromatische, heterocyclische oder arylaliphatische Reste

sind, die paarweise auch Bestandteil von heterocyclischen Ringen sein können. Geeignet sind auch die analogen Komplexe des Bortrifluorids der Formel

$$BF_3.NR_1R_2R_3,$$

wobei
$R_1$, $R_2$ und $R_3$ die vorstehend angegebene Bedeutung haben.

Gut geeignet sind beispielsweise die entsprechenden Bortrichlorid- bzw. Bortrifluorid-Komplexe von tert.-Aminen der vorstehend bei der Beschreibung der Komponenten beispielshaft genannten Art oder Dimethyloctylamin oder auch von heterocyclischen tert.-Aminen wie 1,2-Dimethylimidazol oder 1-Benzyl-2-phenylimidazol.

Die latenten Katalystoren werden in einer Menge von 0,01 bis 10, vorzugsweise 0,1 bis 10 und besonders bevorzugt von 0,5 bis 5 Gew.-Teilen, bezogen auf 100 Gew.-Teile der vorliegenden Harze, eingesetzt.

Die erfindungsgemäßen Preßmassen werden - gegebenenfalls zusammen mit weiteren an sich bekannten Zusatz- und Hilfsstoffen - zur Herstellung von Formkörpern mit z.B. Walzen, Stäben, Säulen, Platten, Profilen, Beschichtungen, Verklebungen, Preßplatten, Elektroisolierungen und zum Formenbau eingesetzt.

Der Gegenstand der Erfindung soll anhand der folgenden Beispiele näher erläutert werden.

**Beispiel 1** (Vergleich)

70 Gew.-Teile getrocknetes Quarzgutmehl FW 600 EST werden mit einer Lösung von 1 g Dimethyloctylamin x $BCl_3$ in 6 g Bisphenol-A-diglycidylether unter Feuchtigkeitsausschluß intensiv vermischt.

Dieses Gemisch wird mit 23 g pulverisiertem 4,4'-Diphenylmethandiisocyanat sorgfältig gemischt und unter Feuchtigkeitsausschluß aufbewahrt (Mischung 1). Aus dieser Mischung werden bei Temperaturen von 160°C und einem Druck von 250 bar in einem mit Trennmittel versehenen Werkzeug Platten gepreßt und unter Beibehaltung des Druckes 30 Minuten auf 200°C erwärmt. Die Platten konnten problemlos entformt werden.

Typische mechanische Eigenschaften eines solchen Formstoffes sind:

| | |
|---|---|
| Schlagzähigkeit | 3,5 kJ/m$^2$, |
| Biegefestigkeit | 95 N/mm$^2$, |
| Randfaserdehnung | 0,55 %, |
| Biege-E-Modul | 17636 N/mm$^2$, |
| Martensgrad | 240°C. |

Diese Preßversuche wurden nach Lagerung der Mischuing 1 bei RT 1, 2, 3, 4 und 8 Wochen wiederholt und führten zu Formkörpern mit praktisch identischen mechanischen Eigenschaften.

**Beispiel 2**( Vergleich)

Man verfährt wie im Beispiel 1 beschrieben, nur mit dem Unterschied, daß an Stelle des pulverisierten Diisocyanats 23 g flüssiges Diisocyanat der Diphenylmethanreihe eingesetzt werden. Dabei entsteht keine rieselfähige Mischung, sondern eine plastisch verformbare Masse.

## Patentansprüche

1. Rieselfähige Preßmassen bestehend aus 40 - 80 Gew.-% eines anorganischen Füllstoffs, 20 - 60 Gew.-% eines organischen Reaktivharzes sowie gegebenenfalls weiteren Hilfs- und Zusatzstoffen, dadurch gekennzeichnet, daß das Reaktivharz aus 5 - 50 Gewichtsteilen Epoxidharz, das pro Molekül 2 - 4 Epoxidgruppen aufweist und einen Epoxidäquivalentgewicht von 90-500 besitzt, sowie 0,01 - 10 Gewichtsteilen bezogen auf 100 Gewichtsteile des vorliegenden Harzes eines thermolatenten Katalysators mit Oniumstruktur und/oder einer Lewissäure-Salz-Struktur und 50 - 95 Gewichtsteilen eines festen pulverisierten Polyisocyanats, das einen Schmelzpunkt oberhalb von 25 °C besitzt, besteht.

2. Preßmassen gemäß Anspruch 1, dadurch gekennzeichnet, daß als anorganische Füllstoffe Quarzmehl, Kreide, $Al_2O_3$, $SiO_2$, Metallpulver und/oder Metalloxidpulver eingesetzt werden.

3. Verfahren zur Herstellung von Preßmassen gemäß Anspruch 1, dadurch gekennzeichnet, daß in einer ersten Stufe der anorganische Füllstoff mit einem gegebenenfalls flüssigen Epoxid und einem latenten Katalysator vermischt wird und anschließend der so erhaltenen Mischung festes pulverisiertes Polyisocyanat zugesetzt wird.

4. Verwendung der Preßmassen gemäß Anspruch 1, gegebenenfalls mit an sich bekannten weiteren Zusatz- und Hilfsstoffen zur Herstellung von Formkörpern, Beschichtungen, Verklebungen, Preßplatten, Elektroisolierungen und im Formenbau.

## Claims

1. Pourable moulding compositions consisting of 40 to 80 wt.% of an inorganic filler, 20 to 60 wt.% of an organic reactive resin and optionally additional auxiliary substances and additives, characterised in that the reactive resin consists of 5 to 50 parts by weight of epoxy resin containing 2 to 4 epoxide groups per molecule and having an epoxide equivalent weight of 90 to 500, as well as of 0.01 to 10 parts by weight, based on 100 parts by weight of the resin present, of a thermolatent catalyst having an onium structure and/or a Lewis-acid salt structure and of 50 to 95 parts by weight of a solid pulverised polyisocyanate having a melting point of above 25°C.

2. Moulding compositions according to claim 1, characterised in that quartz powder, chalk, $Al_2O_3$, $SiO_2$, metal powder and/or metal oxide powder are used as inorganic fillers.

3. Process for the production of moulding compositions according to claim 1, characterised in that in a first step the inorganic filler is mixed with an optionally liquid epoxide and with a latent catalyst and subsequently solid pulverised polyisocyanate is added to the mixture thus obtained.

4. Use of the moulding compositions according to claim 1, optionally containing additional known per se additives and auxiliary substances, for the production of mouldings, coatings, adhesives, moulded plates, electrical insulators and in mould making.

## Revendications

1. Matières à mouler par compression capables de s'écouler librement, consistant en 40 à 80 % en poids d'une matière de charge minérale, 20 à 60 % en poids d'une résine organique réactive et le cas échéant d'autres produits auxiliaires et additifs, caractérisées en ce que la résine réactive consiste en 5 à 50 parties en poids d'une résine époxydique contenant 2 à 4 groupes époxydes par molécule et présentant un poids équivalent d'époxyde de 90 à 500, et 0,01 à 10 parties en poids, pour 100 parties en poids de la résine présente, d'un catalyseur thermolatent à structure en onium et/ou à structure de sel d'acide de Lewis et 50 à 95 parties en poids d'un polyisocyanate solide en poudre ayant un point de fusion supérieur à 25°C.

2. Matières à mouler par compression selon la revendication 1, caractérisées en ce que les matières de charge minérale utilisées sont de la farine de quartz, de la craie, $Al_2O_3$, $SiO_2$, des poudres métalliques et/ou des poudres d'oxydes métalliques.

3. Procédé pour la préparation des matières à mouler par compression selon la revendication 1, caractérisé en ce que, dans un premier stade, on mélange la matière de charge minérale avec un époxyde éventuellement liquide et un catalyseur latent puis, au mélange ainsi obtenu, on ajoute le polyisocyanate solide en poudre.

4. Utilisation des matières à mouler par compression selon la revendication 1, éventuellement avec d'autres additifs et produits auxiliaires connus en soi, pour la fabrication d'objets moulés, l'application de revêtements, la réalisation de collages, la fabrication de plaques moulées par compression, la réalisation d'isolations électriques et la construction de moules.